# EUROPEAN PATENT SPECIFICATION

(11) **EP 2 543 586 B1**
(45) Date of publication and mention of the grant of the patent: **16.09.2015**
(21) Application number: 11750169.2
(22) Date of filing: 28.02.2011
(51) Int. Cl.: B62M 3/08, B62M 3/00

(54) **QUICKLY DETACHABLE PEDAL DEVICE WITHOUT INSTRUMENTS**
SCHNELL UND OHNE WERKZEUG ABNEHMBARE PEDALVORRICHTUNG
DISPOSITIF DE PÉDALE POUVANT ÊTRE RAPIDEMENT DÉTACHÉ SANS UTILISER D'INSTRUMENTS

(30) Priority: 13.04.2010 CN 201010161406; 05.03.2010 CN 201010120652
(43) Date of publication of application: 09.01.2013
(73) Proprietor: Dahon Technologies, Ltd., Shenzhen, Guangdong 518125 (CN)
(72) Inventor: HON, David, Tak-Wei, Shenzhen Guangdong 518125 (CN); FEI, Simin, Shenzhen Guangdong 518125 (CN)
(74) Representative: Haley, Stephen
(86) International application number: PCT/CN2011/071369
(87) International publication number: WO 2011/107016

(56) References cited:
- CN-A- 1 337 339
- CN-A- 1 406 809
- CN-A- 101 654 139
- CN-A- 101 817 384
- CN-U- 2 089 906
- CN-U- 2 118 688
- CN-U- 201 721 588
- CN-Y- 201 343 122
- CN-Y- 201 405 998
- JP-A- 11 208 564
- JP-B2- 3 798 398
- US-A- 5 440 950

## Description

### TECHNICAL FIELD

The present invention relates to a quickly detachable pedal device, and more particularly, to a quickly detachable pedal device without instruments.

### BACKGROUND OF THE INVENTION

Nowadays, the gross of the global energy is decreasing day by day. Due to the rise of the oil price, the public are tending to green and environment-friendly vehicles. The bicycle is one of the best choices, because it is green, environment-friendly and is of benefit for health. In order to promote green commuting, free and public bicycles accompanied by public transportation are provided by local governments. The policy plays good roles in relieving the traffic pressure at rush hours, and the bicycle is one of the best choices for office workers. The folding bicycle is very popular now and there are many bicycles with different styles on sale. Regarding the volume of the bicycle, two difficult problems have been confusing people: 1. the handle; 2. the pedal. It has always been concerned on how to reduce the transverse width of the bicycle. If this problem is solved, bicycles of all styles for men, women, the old and children will be convenient for storage and carrying. Now there are hundreds of patent documents published at home and abroad concerning the folding pedal and crank.

Folding pedal can further reduce the transverse width of the bicycle, save space and make the bicycle easier to be stored and packed. In the field of bicycle, one side of the crank, which faces the pedal board, is called outer side of the crank; and the other side of the crank, which faces the beam, is called inner side of the crank. In the prior art, the fixing device of the detachable pedal is installed at the outer side of the crank, where the pedal is installed. Structure like that will bring about security risks, and it is complicated and causes high cost. Chinese Patent No.CN200820134551.7 discloses a quickly detachable pedal device: in the device, a joining unit 2 is installed between the pedal shaft and the crank; the rear end of the jointing unit is connected to the hole of the crank and the front end of it is sleeved around the pedal shaft; and an operation hole 22 in the upper side of the joining unit 2, together with other parts, locks and unlocks the pedal shaft. Compared with other devices in the prior art, the device above has made certain progress, but there are too many parts, and it is complicated and difficult to assemble. The hole along the axial direction of the pedal shaft will reduce the strength and safety of the pedal shaft. Moreover, the control device is installed at the outer side of the crank, namely, at the side of the crank facing the pedal board, so during cycling, the control device may hitch trousers or may be unlocked by accidental knocks, e.g., being stepped by shoes. Furthermore, the control device will increase the pedal resistance and cause accidents. And the operating direction of the control device is not perfect. US patent No.5586472 discloses a detachable bicycle pedal mounting structure, of which the principle and the defects not described here are similar to the Chinese patent above. US patent of publication No. 2003/0033902A1 discloses a retractable structure of a bicycle pedal: a slot is provided on the side of the screw hole of the crank, and an adapting piece is also provided to enable the whole crank to rotate 90 degrees towards upper side. But the slot on the side of the screw hole of the crank reduces the strength of the device and increases the difficulties for processing; and the adapting piece at the outer side of the crank may unlock the device due to accidental knocks.

Japanese patent application No. 11-208564 discloses a connecting device for crank and pedal shaft: the connecting device is provided with a barrel-shaped fixing device, which shields the outer side, inner side and lower side of the crank; part of the fixing device shielding the inner side of the crank is provided with a locking device to fix the pedal shaft, and the barrel-shaped fixing device is installed on the crank through a receiver of the pedal. The obvious defects of the device are that barrel-shaped fixing device increases thickness and width of the crank, and during cycling, feet or trousers are apt to step or hitch the part of the barrel-shaped fixing device shielding the outer side of the crank. For the reason that the locking device for locking the end of the pedal shaft is also installed on the part of the barrel-shaped fixing device shielding the inner side of the crank, the locking device may get loose and bring about accidents under several dashes. Furthermore, the other five sides of the barrel-shaped fixing device are apt to be dashed by external forces, which will reduce the reliability of the fixing device.

Moreover, Japanese patent application No. 2009-073364 and application No. 2005-145080, each describes a fixing device. Both of them are similar to the barrel-shaped fixing device of the Japanese patent above, and they have the same defects not described here again. What's more, the fixing devices disclosed by the two Japanese patent applications have complicated structures and are not perfect for mass production and application in industry.

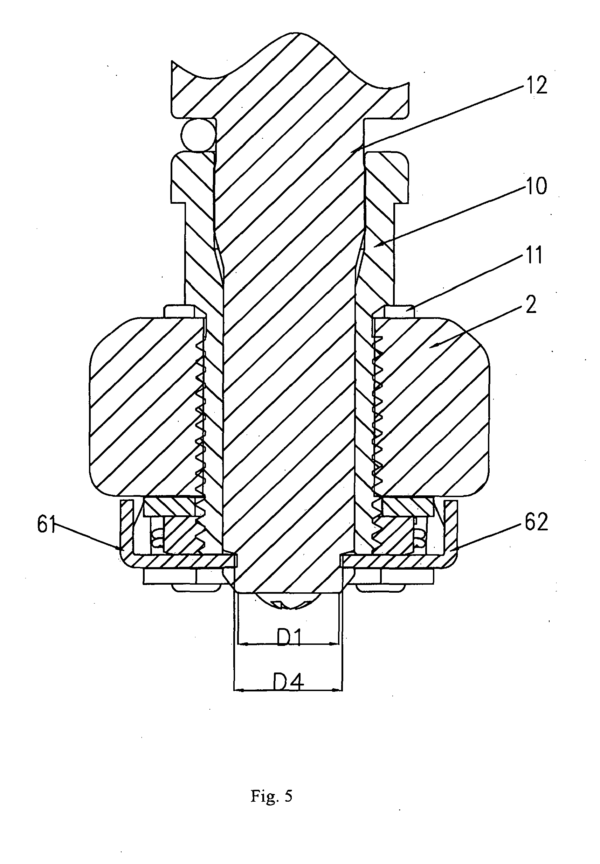

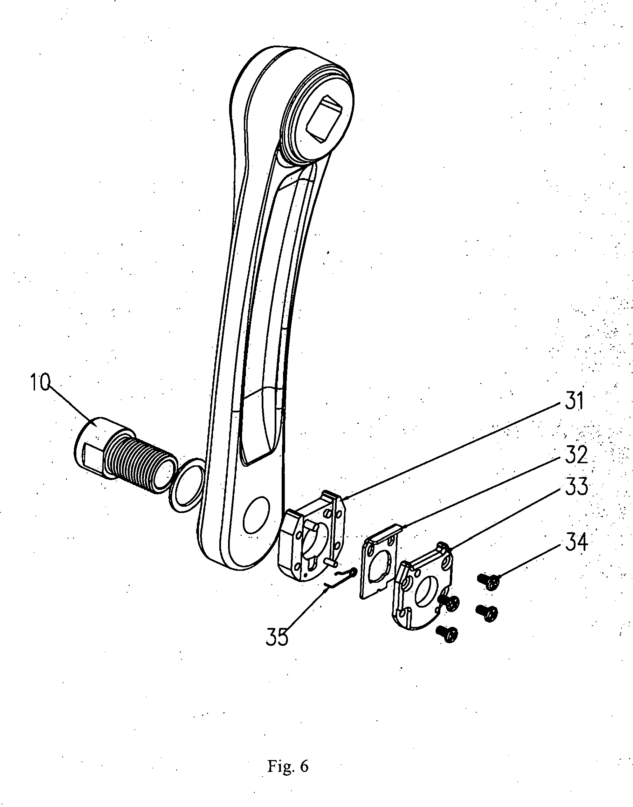

Document CN101654139 is considered the closest prior art and shows a quickly detachable pedal device without instruments (see figures 5 and 6), which includes a pedal and a crank, wherein a fixing device is installed to fix a solid pedal shaft.

Our enterprise, as the global largest folding bicycle manufacturer and distributor in recent 30 years, has made a breakthrough of technology through research and tests. Nowadays, the global output of bicycle is over 110,000,000. It's known that China has the largest number of bicycles manufactured and used, which is 70% of the global output. Technology of folding pedal is applied in products with so high production, and it will bring about tremendous social and economic benefits.

In the prior art, it is supposed that the force for locking or fixing must be extreme large, which is different from the present invention essentially. Through theoretical arithmetic and testified by experiments, we found that when a cylindrical pedal shaft is inserted in a slightly larger hole of the crank, and the pedal shaft has a horizontal angle up to 25 degrees, the shaft will not slip off the hole. Twenty degrees is a maximum for common bicycles. That is, the pedal force component attempting to pull the pedal shaft out is less than the friction force between the pedal shaft and the inner wall of the hole, and both kinds of forces are in proportion to the pedal force. In conclusion, the necessary force for locking the pedal shaft is far less than that disclosed in the prior art, also is far less than the force for locking in the impressions of people. This discovery provides an important inspiration to the present invention.

### SUMMARY OF THE INVENTION

The present invention is aimed at providing a quickly detachable pedal device without instruments, which has simple structure and higher security. It can be operated with one hand alone without instruments, and has low cost and a wide application. It is easily to be spread.

The object of the present invention is achieved by the following technical scheme: a quickly detachable pedal device without instruments, includes a pedal and a crank, a fixing device is installed at non-outer side of the crank to fix a solid pedal shaft; and the fixing device doesn't extend to outer side of the crank, nor includes any parts at the outer side of the crank; a reducing sleeve is disposed between the pedal and the crank; front segment of the reducing sleeve is mounted in a first screw hole of the crank; the pedal shaft is sleeved in a first through hole in rear segment of the reducing sleeve; the reducing sleeve is mounted in the first screw hole of the crank with its front end extending outside the first screw hole for certain distance; the fixing device is installed on front end of the reducing sleeve, which extends to inner side of the crank; and the fixing device locks a groove in front end of the pedal shaft; characterized in that, the fixing device includes a lateral plate module, which includes one or more lateral plates; the one or more lateral plates are provided with a return spring; there is a nick in edge of the lateral plate for locking the groove in the front end of the pedal shaft; the lateral plate module is fixed on a supporting plate; and the front end of the reducing sleeve goes through the supporting plate so that the supporting plate is fixed with a clamp nut.

The pedal shaft may have a groove in the front end, and the crank has a second through hole in lower end, which runs to a first hole of the crank; a spring is disposed in the second through hole and a ball is disposed on upper side of the spring; a screw is disposed in lower end of the second through hole; diameter of upper end of the second through hole is less than that of the ball; and under spring forces, the ball fixes the pedal shaft coordinating with a groove of the pedal shaft.

Lower end of the crank may have a slot; a bolt runs through the slot; the bolt is provided with a nut on one end and a spindle nut on another end, which is connected with an eccentric handle; and a shim is disposed between the eccentric handle and the crank.

The fixing device of the quickly detachable pedal device without instruments of the present invention is installed at the inner side of the crank or in the hole of the crank, namely, the fixing device is completely protected from the outer side of the crank, which avoids hitching trousers or shoes of the riders and avoids the problems of unlocking the fixing device in case of accident knocks. The fixing device is not installed at the outer side of the crank, so it won't hitch the frame or won't bring about visual retentions. The pedal can be installed or detached with one hand by means of the device. The operation of the quickly detachable pedal device is simple and quick, and it can be accomplished within two to three seconds. The quickly detachable pedal device without instruments makes the transverse width of bicycle be reduced and makes the bicycle convenient for storage. What's more, it makes the size of the packing case be reduced greatly, which saves the packing material and is good for environment protection.

### BRIEF DESCRIPTION OF THE DRAWINGS

Fig. 1 is an exploded view illustrating the quickly detachable pedal device according to the first embodiment of the present invention;
Fig. 2 is a schematic view illustrating the lateral plate module of the quickly detachable pedal device according to the first embodiment of the present invention;
Fig. 3 is a schematic view illustrating the pedal shaft of the quickly detachable pedal device according to the first embodiment of the present invention;
Fig. 4 is an assembly view illustrating the quickly detachable pedal device according to the first embodiment of the present invention;
Fig. 5 is a sectional view illustrating the assembled quickly detachable pedal device according to the first embodiment of the present invention;
Fig. 6 is an exploded view illustrating the quickly detachable pedal device according to the first comparative example of the present invention;
Fig. 7 is an assembly view illustrating the quickly detachable pedal device according to the first comparative example of the present invention;
Fig. 8 is a sectional view illustrating the quickly detachable pedal device according to the first comparative example of the present invention;
Fig. 9 is a sectional view illustrating the quickly detachable pedal device according to the second comparative example of the present invention;
Fig. 10 is a schematic view illustrating the quickly detachable pedal device without the second cover board according to the second comparative example of the present invention;
Fig. 11 is a sectional view illustrating the quickly detachable pedal device according to the third comparative example of the present invention;
Fig. 12 is a sectional view illustrating the quickly detachable pedal device according to the second embodiment of the present invention;
Fig. 13 is a sectional view illustrating the quickly detachable pedal device according to the third embodiment of the present invention.

### DETAILED DESCRIPTION OF THE PREFERRED EMBODIMENTS

The quickly detachable pedal device without instruments of the present invention will be described in more details with reference to the accompanying Figures.

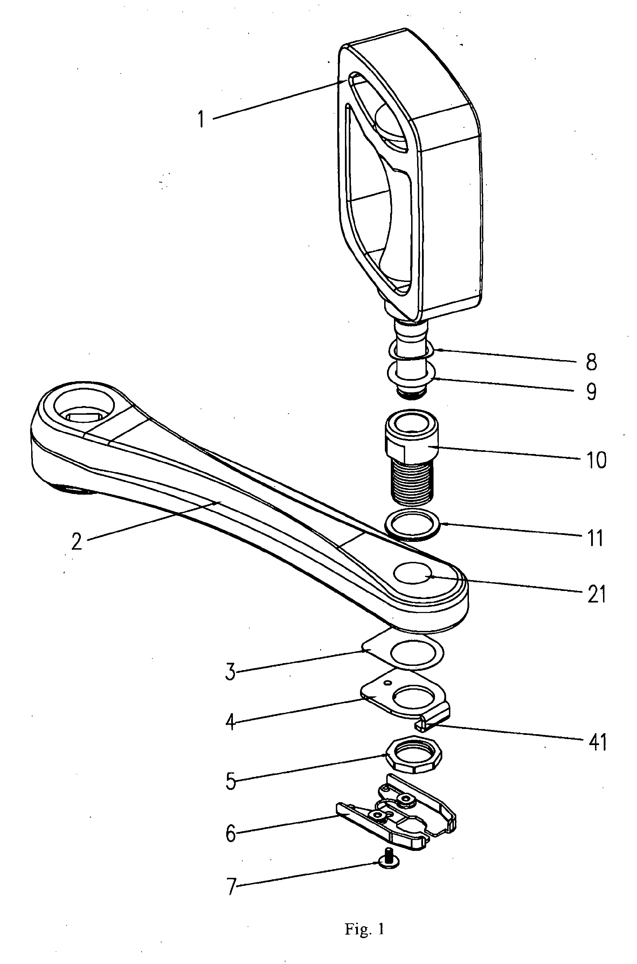

As shown in Figure 1, in the first embodiment, a reducing sleeve 10 is disposed between a pedal 1 and a crank 2. The reducing sleeve 10 is a cylinder which has an inner first through hole. Rear segment of the reducing sleeve 10 is provided with a boss, and its front segment is provided with screw threads which match a first screw hole 21 of the crank 2. The reducing sleeve 10 is mounted in the first screw hole with its front end extends outside the hole for a certain distance. The reducing sleeve 10, which is provided with an adjusting gasket 11, is screwed into the first screw hole. A supporting plate 4 (with a slot downwards), which is provided with double-faced adhesive tape 3, is engaged with the screw threads of the reducing sleeve 10 at the inner side of the crank, and is pressed to the inner surface of the crank by a clamp nut 5; the front segment of the reducing sleeve 10 passes through the first screw hole 21, and the clamp nut 5 is engaged and fixed with the screw threads of the front segment of the reducing sleeve 10. A lateral plate module 6 is provided at the inner side of the supporting plate 4. The supporting plate 4 and the lateral plate module 6 have corresponding holes, through which the supporting plate 4 and the lateral plate module 6 are connected together with a bolt 7. Thus the crank module is assembled. One end of the supporting plate 4 is provided with a baffle 41 so that the slot is formed between the baffle 41 and the supporting plate 4 for supporting the inner surface of the lateral plate module 6.

A spring saddle 8 and an O-Ring rubber ring 9 are put onto a pedal shaft 12, then the pedal shaft 12 is put and slightly pressed into the first through hole of the reducing sleeve 10. A chamfer 122 of the front end of the pedal shaft pushes the lateral plates open apart against spring forces of lateral plates, then the lateral plates are reset at a groove 121 under the spring forces to lock the pedal shaft 12. When detaching the pedal, the lateral plate on the left and the lateral plate on the right should be pressed simultaneously, which ensures double insurance.

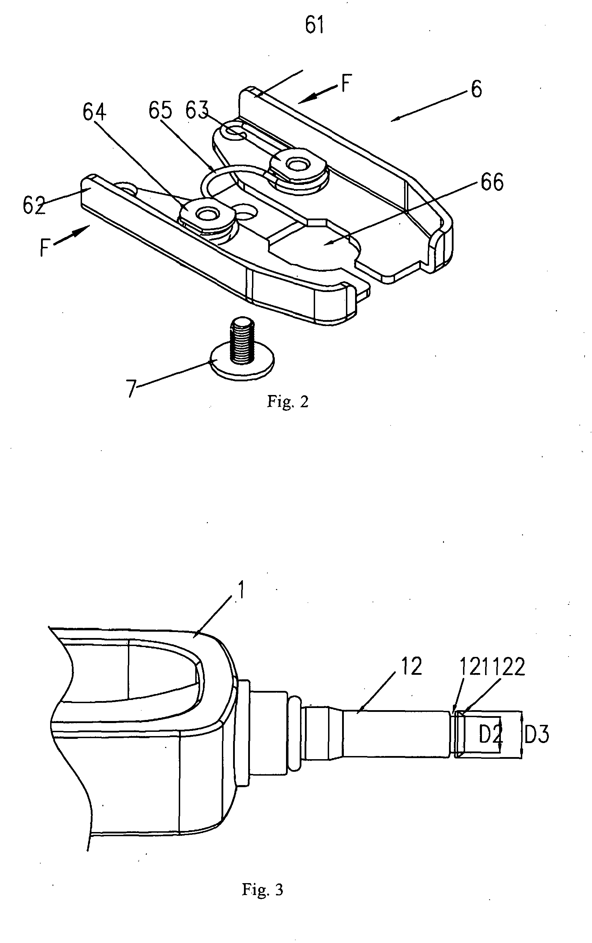

As shown in Figures 2 and 3, a return spring 65 is installed between two lateral plates 61 and 62 of the lateral plate module 6. Exert a force F by gripping ends of the two lateral plates 61 and 62, the lateral plate on the left and the lateral plate on the right will vibrate around axes 63 and 64 respectively, so that the lateral plates are released from the groove 121 of the pedal shaft. Then the pedal will be ejected slightly under spring forces of the spring saddle 8 and the O-Ring rubber ring, and can be taken away with hand. The operation is very convenient: grip ends of the two lateral plates with one hand to release the two lateral plates, and take away the pedal. The pedal shaft 12 is provided with a groove 121 in the front end, and the forefront end forms a chamfer 122, which ensures that the pedal shaft 12 can push the lateral plates open apart smoothly. The baffle 41 protects the two lateral plates from bending deformation along axial direction of the first screw hole of the crank.

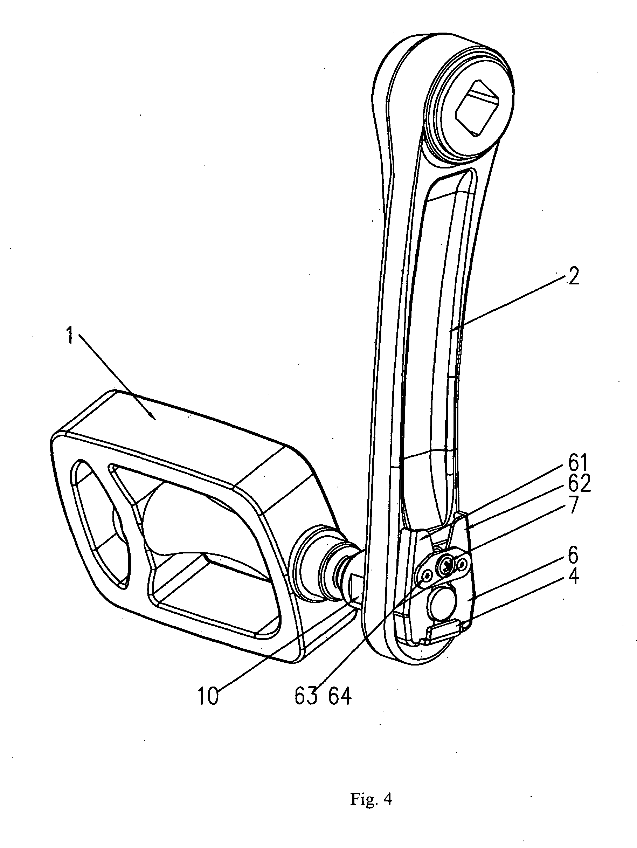

As shown in Figures 4 and 5, after being assembled, the two lateral plates 61 and 62 of the lateral plate module 6 are closed to form a hole 66 in the center for locking the groove 121 of the pedal shaft 12. The crank module and the lateral plate module are installed at the inner side of the crank, so that they are free from accident knocks and can secure the pedal shaft safely.

In the first embodiment, the lateral plate module includes two lateral plates 61 and 62. Practically, one lateral plate can lock the groove of the pedal shaft just as two lateral plates do. But two or more lateral plates can clamp more stably.

In the first embodiment, the supporting plate 4 may alternatively be directly thread connected to the front end of the reducing sleeve 10, such that the clamp nut 5 can be eliminated.

In order to lock or unlock conveniently with one hand, parameters may be further optimized. Diameter of the forefront end of the pedal shaft 12 is D1, diameter of the groove 121 is D2, diameter of the pedal shaft 12 is D3, and diameter of the hole 66,which is formed by the two lateral plates 61 and 62 under spring forces, is D4. If D1 < D4 < D3, and D4 is equal to or slightly greater than D2, better effects will be achieved. It is a preferred scheme, but the characteristic parameters are not indispensable for realizing the present invention.

The crank module of the present invention is fairly thin, that is, after the lateral plate module 6, the supporting plate 4 and the clamp nut 5 are installed at the inner side of the crank, the whole thickness of these parts is less than 7.5mm. Clamping and fixing device of the present invention and the pedal are respectively installed at different sides of the crank, therefore trouser legs of riders and the frame of the bicycle won't be hitched or rubbed by the clamping and fixing device, which avoids dangers in cycling and eliminates visual retentions. Compared with the common pedal, the pedal assembly of the present invention has low cost and is easily spread.

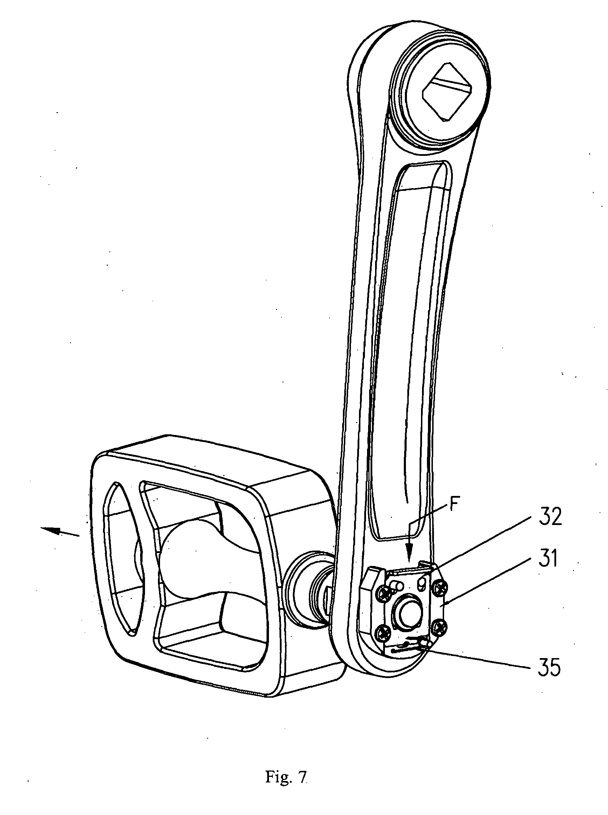

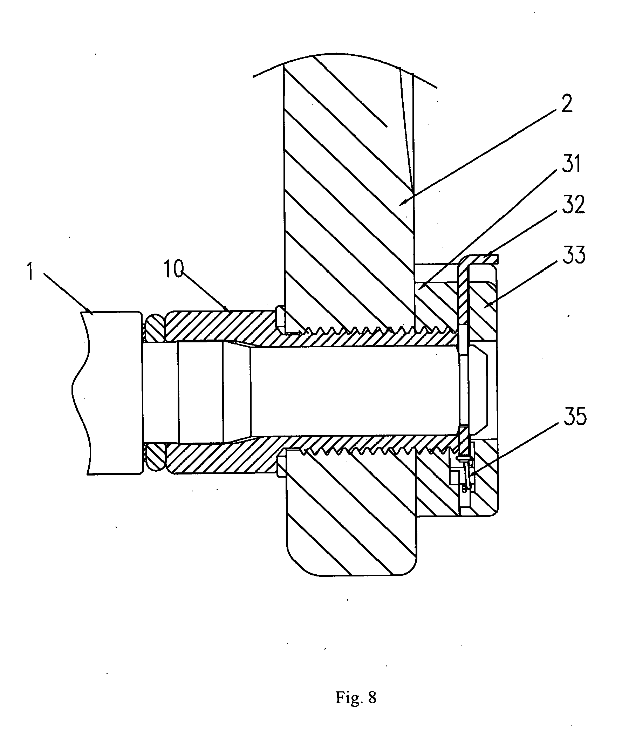

In the first comparative example, as shown in Figures 6-8, the structure at the outer side of the crank, where the pedal is installed, is the same as that in the first embodiment, but the fixing device installed at the inner side of the crank is different from that in the first embodiment. The front end of the reducing sleeve 10 is screwed and fixed in a central hole of a base 31. A locking board 32, which has an opening at the center, is provided at the inner side of the base 31. A first cover board 33 is provided at the inner side of the locking board 32, screws 34 passing through holes of the first cover board 33 are connected and fixed to the base 31. A spring 35 is disposed between the base 31 and the locking board 32, and in a natural state, the locking board is bounced upwards by the spring. The locking board may be provided with guiding grooves and the base is correspondingly provided with limit pillars, which match with the guiding grooves so as to limit directions and range of the movement of the locking board 32.

When installing the pedal, the pedal shaft is inserted in the reducing sleeve 10, then the chamfer 122 of the pedal shaft pushes the locking board 32 to slide downwards against spring forces of the spring. When the pedal shaft is inserted in the position where the groove 121 is flush with the locking board, the locking board 32 is reset under the spring force of the spring 35 and locks the pedal shaft by locking the groove 121 on the pedal shaft. When detaching the pedal, exert a force F following the arrow with one hand, and the locking board 32 slides down until it is out of the groove 121, then the pedal shaft 12 is ejected a little outwards under combined action of the spring forces of the spring saddle 8 and the O-Ring rubber ring 9, and then the locking board is released from the groove. Stop exerting the force F and the pedal can be detached.

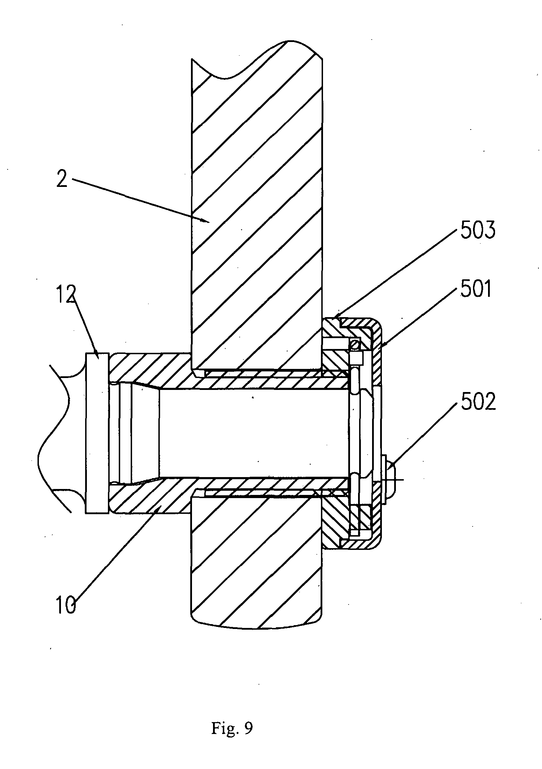

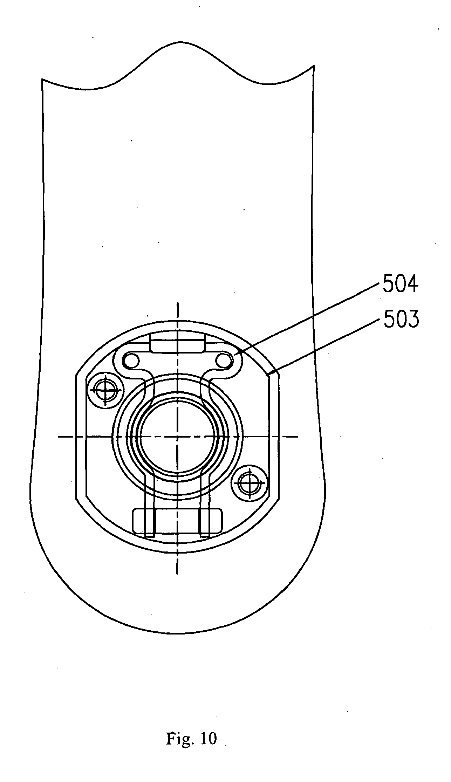

The quickly detachable pedal device according to the second comparative example, as shown in Figures 9 and 10, is mostly the same as that of the first embodiment. The difference is that, in the second comparative example, a torsion spring 504 locks the groove in the front end of the pedal shaft 12 from both sides. The torsion spring 504 is disposed on a supporting plate 503, which is fixed on the end of the reducing sleeve extending to the inner side of the crank. A second cover board 501, which is fixed with screws 502, may be provided at the inner side of the supporting plate. In the quickly detachable pedal device, the torsion spring 504 is elastic, and is drawn towards the center spontaneously under no external forces. Under the external force by putting the pedal shaft into the crank, the torsion spring 504 opens slightly, locks and fixes the groove in the front end of the pedal shaft 12.

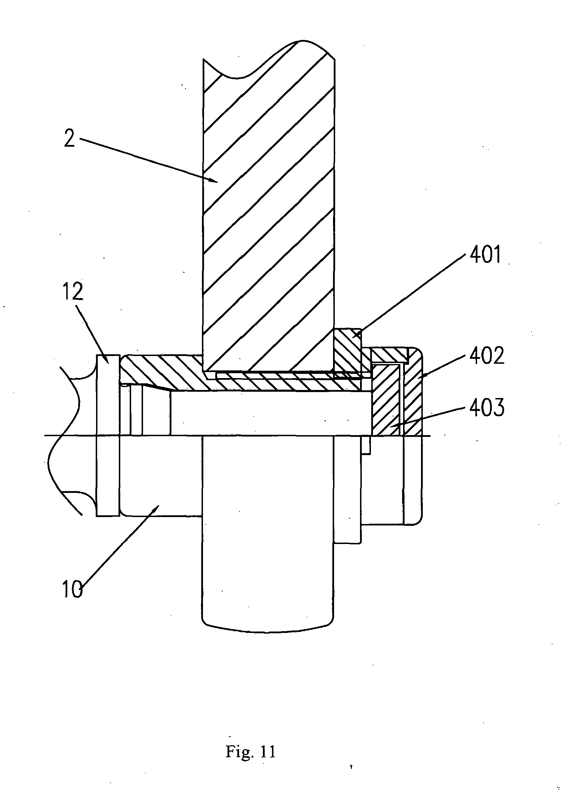

The quickly detachable pedal device according to the third comparative example, as shown in Figure 11, is almost the same as that of the first embodiment except the fixing way of the pedal shaft. In the third comparative example, the fixing device is a magnet attractable device, and the pedal shaft 12 has no grooves. A magnet 403 is disposed at the inner side of the crank 2 to attract the front end of the pedal shaft 12 and protect the pedal shaft from going out of the hole of the crank. A magnetic receiver 401 is disposed at the inner side of the crank and installed on the reducing sleeve. The magnet 403 is installed on the magnetic receiver. A cover 402 is disposed at the inner side of the magnetic receiver to cover the magnet 403. In the quickly detachable pedal device, the installing and detaching of the pedal can be performed by one hand alone.

In the first embodiment and the first to the third comparative examples, after the reducing sleeve is installed in the crank, the front end of the reducing sleeve extends outside the hole of the crank for certain distance. The fixing device is installed on the front end of the reducing sleeve which extends to the inner side of the crank. Additionally, a spring saddle may be fit between the pedal shaft and the reducing sleeve to make it easy to detach the pedal shaft. The crank is a standard component, and it is installed and coordinated with the reducing sleeve. The crank may also be a non-standard component, that is, the crank with the structure described above is manufactured integrally with the reducing sleeve directly.

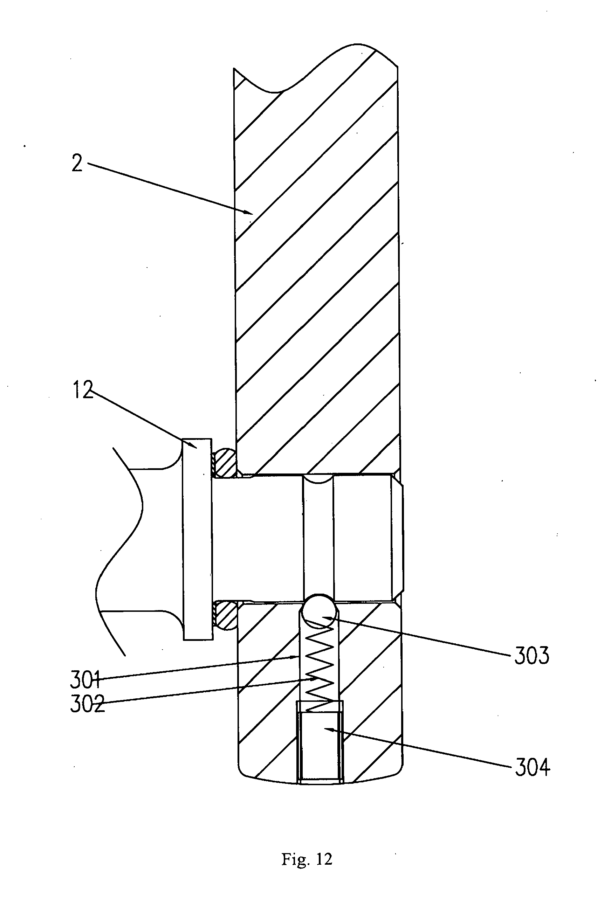

In the second embodiment, as shown in Figure 12, the pedal shaft 12 has a groove in the front end, and the crank 2 has a second through hole 301 in the lower end, which runs to the hole of the crank. A spring 302 is disposed in the second through hole 301 and a ball 303 is disposed in front of the spring. Diameter of the upper end of the second through hole 301 is less than that of the ball 303, which ensures the ball 303 to go partially out of the second through hole 301 but not to run away from the second through hole when it is jacked up under the spring force. A screw 304 is disposed in the lower end of the second through hole 301 to limit the spring. When inserting the pedal shaft 12 in the hole of the crank under certain force, the ball 303 props up the groove of the pedal shaft 12 to prevent the pedal shaft from moving left and right. When detaching the pedal shaft, the operation can be implemented simply by exerting a certain pull force with one hand alone. The quickly detachable pedal device is safe and easy to operate, and the limiting device of the pedal shaft is installed inside the crank, which avoids the fixing device from being unlocked in case that the fixing device hitches trousers or is stepped by feet.

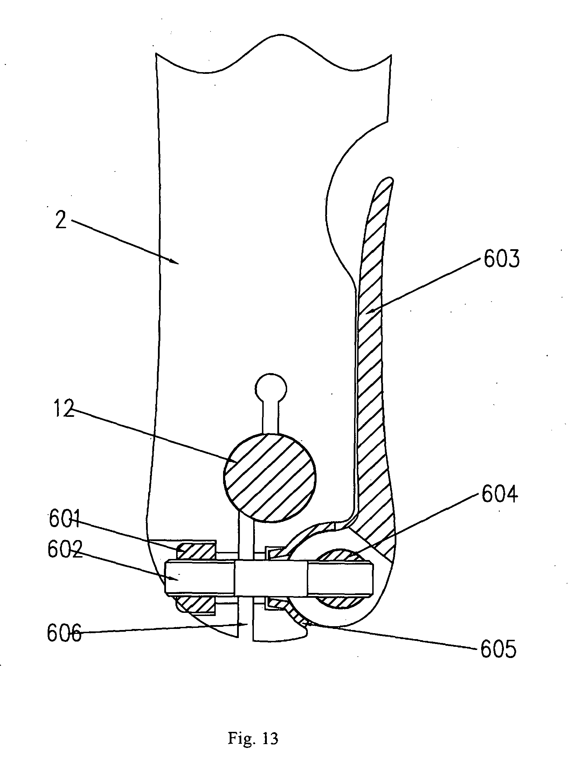

In the third embodiment, as shown in Figure 13, the lower end of the crank has a slot 606 and is provided with an eccentric quickly detachable module which includes a bolt 602 running through the slot 606. The bolt is provided with a nut 601 on one end and a spindle nut 604 on the other end, which is connected with an eccentric handle 603. A shim 605 is disposed between the eccentric handle and the crank. Thus, when the pedal shaft is put in the hole of the crank, the pedal shaft can be locked or unlocked simply by pulling the eccentric handle.

In the first to third embodiments, the fixing device doesn't extend to the outer side of the crank, nor includes any parts at the outer side of the crank, which avoids the fixing device from being unlocked due to being stepped by feet. Furthermore, the pedal shaft in all these embodiments is solid, which ensures better safety.

The quickly detachable pedal device of the present invention can be used in various kinds of vehicles such as bicycles, electrically operated motor cars, motor scooters and so on.

The preferred embodiments described above are not restricted. It will be understood by those skilled in the art that various modifications, identical replacements and improvements may be made therein without departing from the scope of the invention.

## Claims

1. A quickly detachable pedal device without instruments, includes a pedal (1) and a crank (2), wherein, a fixing device is installed at non-outer side of the crank (2) to fix a solid pedal shaft (12); and the fixing device doesn't extend to outer side of the crank (2), nor includes any parts at the outer side of the crank (2);
a reducing sleeve (10) is disposed between the pedal and the crank; the reducing sleeve is mounted in the first screw hole of the crank with its front end extending outside the first screw hole for certain distance; the fixing device is installed on front end of the reducing sleeve, which extends to inner side of the crank; and the fixing device locks a groove (121) in front end of the pedal shaft;
wherein the fixing device includes a lateral plate module (6), which includes one or more lateral plates; the one or more lateral plates are provided with a return spring; there is a nick in edge of the lateral plate for locking the groove (121) in the front end of the pedal shaft; the lateral plate module is fixed on a supporting plate (4); **characterised in that** the front segment of the reducing sleeve is mounted in a first screw hole of the crank; the pedal shaft (12) is sleeved in a first through hole in rear segment of the reducing sleeve; and the front end of the reducing sleeve goes through the supporting plate so that the supporting plate is fixed with a clamp nut (5).

2. The quickly detachable pedal device without instruments according to claim 1, **characterized in that**, the supporting plate has a second screw hole; the lateral plate module has a third through hole; and the lateral plate module is fixed on the supporting plate by a bolt (7) going through the third through hole.

3. The quickly detachable pedal device without instruments according to claims 1 or 2, **characterized in that**, a spring saddle (8) is installed between the pedal shaft (12) and the reducing sleeve.

4. The quickly detachable pedal device without instruments according to any one of claims 1 to 3, **characterized in that**, the crank (2) is manufactured integrally with the reducing sleeve (10).

5. The quickly detachable pedal device without instruments according to claim 1, **characterized in that**, the pedal shaft has a groove in front end, and the crank has a second through hole (301) in lower end, which runs to a hole of the crank; a spring (302) is disposed in the second through hole and a ball (303) is disposed on upper side of the spring; a screw (304) is disposed in lower end of the second through hole; diameter of upper end of the second through hole is less than that of the ball; and under spring forces, the ball fixes the pedal shaft coordinating with a groove of the pedal shaft.

6. The quickly detachable pedal device without instruments according to claim 1, **characterized in that**, lower end of the crank has a slot (606); a bolt (602) runs through the slot; the bolt is provided with a nut (601) on one end and a spindle nut (604) on another end, which is connected with an eccentric handle (603); and a shim (605) is disposed between the eccentric handle and the crank.

## Patentansprüche

1. Schnell und ohne Werkzeug abnehmbare Pedalvorrichtung, die ein Pedal (1) und eine Kurbel (2) einschließt, wobei, eine Befestigungsvorrichtung an einer nicht äußeren Seite der Kurbel (2) angebracht ist, um eine massive Pedalachse (12) zu befestigen; und sich die Befestigungsvorrichtung weder zur Außenseite der Kurbel (2) erstreckt, noch irgendwelche Teile an der Außenseite der Kurbel (2) einschließt;
eine Reduziermuffe (10) zwischen dem Pedal und der Kurbel angeordnet ist;
die Reduziermuffe im ersten Schraubenloch der Kurbel montiert ist, wobei sich ihr vorderes Ende für einen gewissen Abstand außerhalb des ersten Schraubenlochs erstreckt; die Befestigungsvorrichtung wird am vorderen Ende der Reduziermuffe angebracht, die sich zur Innenseite der Kurbel erstreckt; und die Befestigungsvorrichtung verriegelt eine Nut (121) im vorderen Ende der Pedalachse;
wobei die Befestigungsvorrichtung ein laterales Plattenplatenmodul (6) einschließt, das eine oder mehrere laterale Platten einschließt; die eine oder mehreren lateralen Platten mit einer Rückholfeder versehen sind; es ist eine Kerbe im Rand der lateralen Platte zum Verriegeln der Nut (121) im vorderen Ende der Pedalachse vorhanden; das laterale Plattenmodul ist auf einer Tragplatte (4) befestigt; **dadurch gekennzeichnet, dass** das vordere Segment der Reduziermuffe in ein erstes Schraubenloch der Kurbel montiert wird; die Pedalachse (12) in ein erstes Durchgangsloch im hinteren Segment der Reduziermuffe gebuchst wird;
und das vordere Ende der Reduziermuffe durch die Traglatte hindurch geht, sodass die Tragplatte mit einer Spannmutter (5) befestigt wird.

2. Schnell und ohne Werkzeug abnehmbare Pedalvorrichtung nach Anspruch 1, **dadurch gekennzeichnet, dass** die Tragplatte ein zweites Schraubenloch aufweist; das laterale Plattenmodul ein drittes Durchgangsloch aufweist; und das laterale Plattenmodul mit einem Bolzen (7), der durch das dritte Durchgangsloch hindurch geht, an der Tragplatte befestigt ist.

3. Schnell und ohne Werkzeug abnehmbare Pedalvorrichtung nach Ansprüchen 1 oder 2, **dadurch gekennzeichnet, dass** ein Federsattel (8) zwischen der Pedalachse (12) und der Reduziermuffe angebracht ist.

4. Schnell und ohne Werkzeug abnehmbare Pedalvorrichtung nach irgendeinem der Ansprüche 1 bis 3, **dadurch gekennzeichnet, dass** die Kurbel (2) integral mit der Reduziermuffe (10) hergestellt ist.

5. Schnell und ohne Werkzeug abnehmbare Pedalvorrichtung nach Anspruch 1, **dadurch gekennzeichnet, dass** die Pedalachse im vorderen Ende eine Nut aufweist, und die Kurbel ein zweites Durchgangsloch (301) im unteren Ende aufweist, das zu einem Loch der Kurbel verläuft; eine Feder (302) im zweiten Durchgangsloch angeordnet ist und eine Kugel (303) am oberen Ende der Feder angeordnet ist; eine Schraube (304) im unteren Ende des zweiten Durchgangslochs angeordnet ist; der Durchmesser des oberen Endes des zweiten Durchgangslochs geringer als jener der Kugel ist; und unter Federkräften fixiert die Kugel die Pedalachse koordinierend mit einer Nut der Pedalachse.

6. Schnell und ohne Werkzeug abnehmbare Pedalvorrichtung nach Anspruch 1, **dadurch gekennzeichnet, dass** das untere Ende der Kurbel einen Schlitz (606) aufweist; ein Bolzen (602) durch den Schlitz verläuft; der Bolzen mit einer Mutter (601) an einem Ende und einer Spindelmutter (604) an einem anderen Ende versehen ist, das mit einem exzentrischen Griff (603) verbunden ist; und eine Beilagscheibe (605) zwischen dem exzentrischen Griff und der Kurbel angeordnet ist.

## Revendications

1. Dispositif de pédale pouvant être rapidement détaché sans utiliser d'instruments, comprenant une pédale (1) et une manivelle (2), dans lequel un dispositif de fixation est installé au niveau d'un côté non extérieur de la manivelle (2) à des fins de fixation d'un axe de pédale solide (12) ; et dans lequel le dispositif de fixation ne s'étend pas vers un côté extérieur de la manivelle (2), et ne comprend aucune pièce au niveau du côté extérieur de la manivelle (2) ;
un manchon de réduction (10) est disposé entre la pédale et la manivelle ; le manchon de réduction est monté dans le premier trou de vis de la manivelle avec son extrémité avant s'étendant à l'extérieur du premier trou de vis sur une certaine distance ; le dispositif de fixation est installé sur une extrémité avant du manchon de réduction, qui s'étend vers un côté intérieur de la manivelle ; et le dispositif de fixation bloque une rainure (121) dans une extrémité avant de l'axe de pédale ;
dans lequel le dispositif de fixation comprend un module de type plaque latérale (6), qui comprend une ou plusieurs plaques latérales ; lesdites une ou plusieurs plaques latérales comportent un ressort de rappel ; il y a un cran d'arrêt dans un bord de la plaque latérale à des fins de blocage de la rainure (121) dans l'extrémité avant de l'axe de pédale ; le module de type plaque latérale est fixé sur une plaque de support (4) ; **caractérisé en ce que** le segment avant du manchon de réduction est monté dans un premier trou de vis de la manivelle ; l'axe de pédale (12) est emmanché dans un premier trou traversant dans un segment arrière du manchon de réduction : et l'extrémité avant du manchon de réduction traverse la plaque de support de telle manière que la plaque de support est fixée au moyen d'un écrou de serrage (5).

2. Dispositif de pédale pouvant être rapidement détaché sans utiliser d'instruments selon la revendication 1, **caractérisé en ce que** la plaque de support a un deuxième trou de vis ; le module de type plaque latérale a un troisième trou traversant ; et le module de type plaque latérale est fixé sur la plaque de support par un boulon (7) traversant le troisième trou traversant.

3. Dispositif de pédale pouvant être rapidement détaché sans utiliser d'instruments selon la revendication 1 ou la revendication 2, **caractérisé en ce qu'**une bride de ressort (8) est installée entre l'axe de pédale (12) et le manchon de réduction.

4. Dispositif de pédale pouvant être rapidement détaché sans utiliser d'instruments selon l'une quelconque des revendications 1 à 3, **caractérisé en ce que** la manivelle (2) est fabriquée d'une seule pièce avec le manchon de réduction (10).

5. Dispositif de pédale pouvant être rapidement détaché sans utiliser d'instruments selon la revendication 1, **caractérisé en ce que** l'axe de pédale a une rainure dans une extrémité avant, et la manivelle a un deuxième trou traversant (301) dans une extrémité inférieure, qui s'achemine jusqu'à un trou de la manivelle ; un ressort (302) est disposé dans le deuxième trou traversant et une bille (303) est disposée sur un côté supérieur du ressort ; une vis (304) est disposée dans une extrémité inférieure du deuxième trou traversant ; le diamètre de l'extrémité supérieure du deuxième trou traversant est inférieur à celui de la bille ; et sous l'effet des forces du ressort, la bille fixe l'axe de pédale de manière coordonnée avec une rainure de l'axe de pédale.

6. Dispositif de pédale pouvant être rapidement détaché sans utiliser d'instruments selon la revendication 1, **caractérisé en ce qu'**une extrémité inférieure de la manivelle a une fente (606) ; un boulon (602) s'achemine au travers de la fente ; le boulon comporte un écrou (601) sur une extrémité et un écrou de moyeu (604) sur une autre extrémité, qui est raccordé au moyen d'un manche excentrique (603) ; et une cale (605) est disposée entre le manche excentrique et la manivelle.
